# EUROPÄISCHE PATENTSCHRIFT

(11) **EP 3 315 848 B1**
(45) Veröffentlichungstag und Bekanntmachung des Hinweises auf die Patenterteilung: **07.08.2019**
(21) Anmeldenummer: 17196888.6
(22) Anmeldetag: 17.10.2017
(51) Int. Cl.: F21S 8/04, F21V 3/02, F21V 3/04, F21V 21/02, G02B 6/00

(54) **BELEUCHTUNGSVORRICHTUNG SOWIE LEUCHTEINHEIT**
LIGHTING DEVICE AND LIGHTING UNIT
DISPOSITIF D'ÉCLAIRAGE AINSI QU'UNITÉ D'ÉCLAIRAGE

(30) Priorität: 28.10.2016 DE 102016221257
(43) Veröffentlichungstag der Anmeldung: 02.05.2018
(73) Patentinhaber: H4X e.U., 8055 Graz (AT)
(72) Erfinder: Hierzer, Andreas, 8010 Graz (AT)
(74) Vertreter: Isarpatent

(56) Entgegenhaltungen:
- WO-A1-2014/038312
- DE-A1-102014 112 657
- DE-A1-102014 204 544
- GB-A- 1 223 825

## Beschreibung

### GEBIET DER ERFINDUNG

Die Erfindung betrifft eine Beleuchtungsvorrichtung sowie eine Leuchteinheit.

### TECHNISCHER HINTERGRUND

Wenngleich die vorliegende Erfindung bei Beleuchtungsvorrichtungen und Beleuchtungsanordnungen unterschiedlichster Art anwendbar und nützlich sein kann, soll die der Erfindung zu Grunde liegende Problematik nachfolgend am Beispiel einer Leuchte zur Montage im Deckenbereich näher beschrieben werden.

Insbesondere bei Neubauten kann es beispielsweise durch Setzungsvorgänge des Bauwerks vorkommen, dass eine massive Rohdecke sich etwas bewegt und/oder eine daran befestigte Zwischendecke, die zum Beispiel mit Rigipsplatten gebildet ist, nach der Fertigstellung noch etwas "nachrückt". Die Geometrien der Rohdecke, der Zwischendecke und deren Unterkonstruktion erfahren hierbei über einen längeren Zeitraum eine Veränderung, die allerdings im Vergleich zu den Gesamtabmessungen des Bauwerks relativ gering ist. So kann beispielsweise in Neubauten eine Absenkung von bis zu 8 mm über eine Strecke von 3 m noch als akzeptabel anzusehen sein. Kommt es nach Abschluss der Baumaßnahmen in einem zulässigen Ausmaß zu derartigen Geometrieveränderungen, so können fest in oder an der Zwischendecke, deren Unterkonstruktion und/oder an der Rohdecke angebundene Elemente ebenfalls eine Verformung erfahren.

In der DE 10 2014 204 544 A1 wird eine flache Profilleuchte zum Einbau in eine Rigipskonstruktion beschrieben. Diese flache Profilleuchte weist eine optische Einheit auf, die in einem Trägerprofil austauschbar befestigt ist. Die in der DE 10 2014 204 544 A1 beschriebene Profilleuchte weist hierbei eine verringerte Einbautiefe auf, wodurch eine ästhetisch ansprechende Form der eingebauten Profilleuchte erreicht wird.

Die DE 10 2014 112 657 A1 beschreibt eine Leuchte für ein Lichtbandsystem. Die beschriebene Leuchte weist einen Leuchteneinsatz mit einem etwa U-förmigen Querschnitt auf. An einer Unterseite eines Mittelbereichs des Leuchteneinsatzes ist eine Anlagefläche für eine Platine gebildet, welche Platine Leuchtmittel trägt. Die Leuchte weist ferner eine Abdeckung auf, die zusammen mit dem Leuchteneinsatz einen Raum umschließt, in dem die Platine angeordnet ist.

Leuchten zum Beispiel im Deckenbereich können oftmals relativ große Abmessungen aufweisen. Es wäre daher wünschenswert, zum Beispiel auch bei merklichen Setzungsvorgängen und gerade auch bei Leuchten größerer Abmessungen, insbesondere größerer Länge, bei im Bauwerk auftretenden Veränderungen durch Setzen oder "Nachrücken" ein möglichst ästhetisches Erscheinungsbild in verbesserter und einfacherer Weise erreichen zu können. Zudem wäre es wünschenswert, auch bei anderweitig bedingten Geometrieveränderungen ein derartiges ästhetisches Erscheinungsbild noch einfacher und besser erzielen zu können. WO 2014/038.312 offenbart eine Leuchteinheit gemäß dem Oberbegriff des Anspruchs 1.

### ZUSAMMENFASSUNG DER ERFINDUNG

Vor diesem Hintergrund liegt der Erfindung die Aufgabe zu Grunde, eine weiterentwickelte Beleuchtungsvorrichtung zu schaffen, mit der unerwünschte Auswirkungen von Geometrieveränderungen einer Konstruktion oder eines Bauwerks und/oder von Verformungen eines Bestandteils der Beleuchtungsvorrichtung auf die ästhetische Wirkung der Beleuchtungsvorrichtung in noch besserer Weise vermieden werden können. Ferner soll eine entsprechend weiterentwickelte, verbesserte Leuchteinheit geschaffen werden.

Erfindungsgemäß wird diese Aufgabe durch eine Beleuchtungsvorrichtung mit den Merkmalen des Patentanspruchs 11 und/oder durch eine Leuchteinheit mit den Merkmalen des Patentanspruchs 1 gelöst.

Demgemäß wird eine Beleuchtungsvorrichtung mit einer flachen, langgestreckten Leuchteinheit und mit einer profilförmigen Trägerkomponente vorgeschlagen, wobei die Leuchteinheit für ein Befestigen derselben an der Trägerkomponente eingerichtet ist. Die Leuchteinheit weist ein zumindest abschnittsweise lichtdurchlässiges Profilelement mit einer zumindest abschnittsweise U-artigen Querschnittsform auf. Einander gegenüberliegende Schenkel der U-artigen Querschnittsform erstrecken sich im Wesentlichen in Dickenrichtung der Leuchteinheit, und durch die U-artige Querschnittsform ist ein Innenbereich des Profilelements mit einer zwischen den Schenkeln gebildeten Öffnung ausgebildet. Ferner weist hierbei die Leuchteinheit ein flaches Basisteil auf, das im Bereich der Öffnung angeordnet und mit dem Profilelement gekoppelt ist. Erfindungsgemäß ist das zumindest abschnittsweise lichtdurchlässige Profilelement mit einem ersten Material gebildet, welches einer Verformung weniger Widerstand entgegensetzt als ein zweites Material, mit dem das flache Basisteil gebildet ist. In dem Innenbereich ist eine Lichterzeugungseinrichtung zur Erzeugung von durch die Leuchteinheit im Betrieb abgebbarem Licht angeordnet.

Ferner wird eine Leuchteinheit, insbesondere für eine derartige Beleuchtungsvorrichtung, vorgeschlagen, wobei die Leuchteinheit flach und langgestreckt ausgebildet und für ein Befestigen derselben an einer profilförmigen Trägerkomponente eingerichtet ist. Hierbei weist die Leuchteinheit ein zumindest abschnittsweise lichtdurchlässiges Profilelement mit einer zumindest abschnittsweise U-artigen Querschnittsform auf, einander gegenüberliegende Schenkel der U-artigen Querschnittsform erstrecken sich im Wesentlichen in Dickenrichtung der Leuchteinheit, und durch die U-artige Querschnittsform ist ein Innenbereich des Profilelements mit einer zwischen den Schenkeln gebildeten Öffnung ausgebildet. Die Leuchteinheit weist ferner ein flaches Basisteil auf, das im Bereich der Öffnung angeordnet und mit dem Profilelement gekoppelt ist. Das zumindest abschnittsweise lichtdurchlässige Profilelement ist mit einem ersten Material gebildet, welches einer Verformung weniger Widerstand entgegensetzt als ein zweites Material, mit dem das flache Basisteil gebildet ist. In dem Innenbereich ist eine Lichterzeugungseinrichtung zur Erzeugung von durch die Leuchteinheit im Betrieb abgebbarem Licht angeordnet.

Die der Erfindung zu Grunde liegende Idee besteht darin, die Leuchteinheit derart auszubilden, dass die Leuchteinheit gegenüber Verformungen relativ flexibel und nachgiebig reagiert. Zum Beispiel kann bei einem Absenken einer Decke, mit der die Trägerkomponente beispielhaft fest gekoppelt sein kann, die Leuchteinheit der erfindungsgemäßen Beleuchtungsvorrichtung somit einer eventuellen Verformung der Trägerkomponente in verbesserter Weise folgen und sich dieser anpassen. Gleichermaßen kann eine verbesserte Anpassung der Leuchteinheit an Verformungen der Trägerkomponente auch dann erreicht werden, wenn die Verformung der Trägerkomponente auf andere Ursachen zurückgeht, zum Beispiel auf über größere Längen wirkende Gewichtskräfte.

Die verbesserte Flexibilität der Leuchteinheit wird insbesondere dadurch ermöglicht, dass das zumindest abschnittsweise lichtdurchlässige Profilelement mit einer U-artigen Querschnittsform ausgebildet ist, während das Basisteil flach ausgebildet ist. Ein Innenbereich für die Leuchteinheit wird mit Hilfe der U-artigen Querschnittsform des Profilelements geschaffen. Die Querschnittsform des Profilelements kann hierbei insbesondere als Ganzes im Wesentlichen U-artig ausgebildet sein. Das Basisteil kann hierbei aufgrund der flachen Ausbildung vergleichsweise leicht durch Biegung verformt werden, auch wenn es mit einem Material ausgebildet wird, das an sich aufgrund seiner Materialeigenschaften einer Verformung einen relativ großen Widerstand entgegensetzt. Das zumindest abschnittsweise lichtdurchlässige Profilelement hingegen wird mit einem leichter verformbaren Material ausgebildet, wodurch trotz der U-artigen Querschnittsform des Profilelements die Leuchteinheit als Ganzes ausreichend flexibel und nachgiebig ist.

Somit wird ein ästhetisches Erscheinungsbild der Beleuchtungsvorrichtung auch im Falle von Nachrückvorgängen noch besser und einfacher erreicht. Indem die Leuchteinheit der Verformung der Trägerkomponente besser folgt, können Abweichungen in der erwünschten Ausrichtung und Positionierung der Leuchteinheit zur Trägerkomponente und/oder unerwünscht nicht bündige Übergänge einfacher vermieden werden.

Ferner kann auch vorteilhaft eine weiter verbesserte Befestigung der Leuchteinheit an der Trägerkomponente erreicht werden. Unerwünschte Kraftwirkungen zwischen der Leuchteinheit und der Trägerkomponente können mit Hilfe der Nachgiebigkeit der Leuchteinheit zumindest vermindert werden. Dies kann mit Blick auf die Befestigung der Leuchteinheit in oder an der Trägerkomponente auch zu einer verbesserten Haltewirkung im Falle von Vibrationen beitragen. Hierdurch können die erfindungsgemäße Leuchteinheit und Beleuchtungsvorrichtung Vorteile beim Einsatz in Umgebungen, in denen es öfters zu Vibrationen kommt, bieten, beispielsweise wenn in näherer Umgebung häufig schwere Fahrzeuge wie Züge, Lastkraftwagen oder Baustellenfahrzeuge bewegt werden. Beispielsweise kann die erfindungsgemäße Leuchteinheit bzw. Beleuchtungsvorrichtung bei Verwendung in oder nahe einem Bahnhof vorteilhaft sein. Zudem ist es denkbar, dass die erfindungsgemäß vorgeschlagene Leuchteinheit und Beleuchtungsvorrichtung selbst bei stärkeren Erschütterungen, wie sie etwa bei einem Erdbeben auftreten, mit Vorteil eingesetzt werden können.

Erfindungsgemäß weist die Lichterzeugungseinrichtung mindestens eine LED-Platine auf, die in dem Innenbereich des Profilelements einem der Schenkel benachbart angeordnet ist. Somit kann Licht auf eine effiziente, energiesparende Weise bereitgestellt werden, wobei die LED-Platine durch ihre Anordnung benachbart dem Schenkel vorteilhaft die Lichtabgabe durch die Leuchteinheit im Betrieb nicht stört.

Erfindungsgemäß weist die Leuchteinheit ein Isolationselement auf, welches folienförmig oder schichtförmig ausgebildet und auf einer dem Innenbereich zugewandten Seite des flachen Basisteils angeordnet ist, um das Basisteil gegenüber der LED-Platine elektrisch isolierend abzuschirmen. Somit kann vorteilhaft ein elektrischer Kontakt der LED-Platine mit dem Basisteil verhindert und somit dazu beigetragen werden, einen Betrieb der Leuchteinheit mit elektrischem Strom bei höheren Spannungen zu ermöglichen, beispielsweise bei Spannungen oberhalb der maximal zulässigen Berührungsspannung. Hierbei kann der Abstand zwischen der Platine und dem Basisteil gering gehalten werden, was für eine kompakte, flache Bauform der Leuchteinheit vorteilhaft ist. Ein Betrieb bei höherer elektrischer Spannung ermöglicht vorteilhaft geringere elektrische Ströme in der Leuchteinheit sowie beispielsweise die Nutzung modifizierter Konverter oder in einigen Ausgestaltungen die Möglichkeit, die Leuchteinheit ohne ein zusätzliches elektronisches Vorschaltgerät zu betreiben.

Erfindungsgemäß steht das Isolationselement in einer Richtung quer zu der LED-Platine über einen Rand der LED-Platine über. Erfindungsgemäß steht das Isolationselement zu dem der LED-Platine benachbarten Schenkel hin über den Rand der LED-Platine über. Die überstehende Anordnung verbessert die elektrische Abschirmung des Basisteils von der Platine weiter. Der Weg eventueller Kriechströme von der Platine zum Basisteil wird vergrößert. Kriechströme können vermieden oder zumindest erheblich verringert werden.

Erfindungsgemäß erstreckt sich das Isolationselement in einem Randbereich desselben in eine Nut in dem zumindest abschnittsweise lichtdurchlässigen Profilelement hinein. Auch dies kann zu einer weiter verbesserten elektrischen Isolations- und Abschirmwirkung durch das Isolationselement beitragen.

Vorteilhafte Ausgestaltungen und Weiterbildungen der Erfindung ergeben sich aus den Unteransprüchen sowie aus der Beschreibung unter Bezugnahme auf die Figuren der Zeichnung.

In einer Ausgestaltung ist ein Elastizitätsmodul des ersten Materials geringer als ein Elastizitätsmodul des zweiten Materials. Somit setzt das erste Material als solches einer elastischen Verformung weniger Widerstand entgegen als das zweite Material.

In einer Ausgestaltung sind das zumindest abschnittsweise lichtdurchlässige Profilelement als ein Profil aus dem ersten Material und das flache Basisteil als ein Profil aus dem zweiten Material ausgebildet. Das flache Basisteil kann somit der Leuchteinheit eine hinreichende Stabilität verleihen, ohne dass eine zu große Steifigkeit der Leuchteinheit resultiert. Zugleich kann mit dem Profilelement durch Nutzung des ersten Materials ein ausreichender Innenbereich geschaffen werden, ohne dass die U-artige Querschnittsform und insbesondere deren Schenkel die Steifigkeit der Leuchteinheit übermäßig steigern.

In einer Ausgestaltung ist die Leuchteinheit an der Trägerkomponente lösbar befestigbar. Somit kann die Leuchteinheit vorteilhaft nach der erstmaligen Montage bei Bedarf wieder von der Trägerkomponente gelöst werden, beispielsweise für eine Nachrüstung der Leuchteinheit oder einen Austausch derselben bei Beschädigung.

In einer Ausgestaltung ist an dem Basisteil mindestens eine basisteilseitige Einrichtung zur Befestigung der Leuchteinheit an der Trägerkomponente angeordnet. Für die Befestigung der Leuchteinheit vorgesehene Mittel sind somit an einem Bauteil angeordnet, welches mit dem zweiten Material, das als solches einer Verformung in größerem Maße widersteht als das erste Material des Profilelements, gebildet ist. Somit kann die Einleitung von Kräften, die im Zuge der Befestigung und des Haltens der Leuchteinheit wirken, in ein mit einem relativ widerstandsfähigen Material gebildetes Bauteil der Leuchteinheit erfolgen.

Gemäß einer Weiterbildung ist an der Trägerkomponente mindestens eine trägerkomponentenseitige Einrichtung angeordnet, welche zur Befestigung der Leuchteinheit an der Trägerkomponente mit der basisteilseitigen Einrichtung zusammenwirkt.

Somit kann eine rasche und wirkungsvolle, insbesondere lösbare, Befestigung der Leuchteinheit an der Trägerkomponente erfolgen.

Gemäß einer weiteren Weiterbildung ist vorgesehen, dass die Leuchteinheit mittels Magnetkraft an der Trägerkomponente befestigbar ist und/oder dass die Leuchteinheit mittels eines Schnappers formschlüssig an der Trägerkomponente befestigbar ist. Eine magnetische Befestigung macht es möglich, die Leuchteinheit zuverlässig und wirkungsvoll an der Trägerkomponente zu halten, und vermeidet zudem Verschleißvorgänge und bewegliche und/oder elastische Bauteile. Insbesondere im Falle von Setzungsvorgängen oder anderen Vorgängen, die zu einer Verformung der Trägerkomponente führen, kann sich die Befestigung der Leuchteinheit mittels Magnetkraft als vorteilhaft erweisen, da zum Beispiel Verschiebebewegungen der Leuchteinheit relativ zur Trägerkomponente, wie sie bei den genannten Verformungsvorgängen vorkommen können, zugelassen werden, ohne dass sich die Befestigung löst. Eine Befestigung der Leuchteinheit mittels eines Schnappers, oder eine andersgeartete formschlüssig einrastende Befestigung, bietet eine zuverlässige formschlüssige Kopplung der Leuchteinheit mit der Trägerkomponente und kann gewichtsparend sein.

In einer Ausgestaltung ist die Trägerkomponente für die Befestigung der Leuchteinheit mit mindestens einem ferromagnetischen Element versehen. Auf diese Weise ist die Trägerkomponente für eine effektive magnetische Befestigung der Leuchteinheit an der Trägerkomponente eingerichtet.

Das ferromagnetische Element ist hierbei vorzugsweise blattartig oder streifenartig ausgebildet. Insbesondere ist hierbei das ferromagnetische Element in einer Nut der Trägerkomponente an der Trägerkomponente gehalten. Auf diese Weise kann Platz in der Dickenrichtung der Leuchteinheit eingespart werden, was für eine flache Gestaltung der Leuchteinheit vorteilhaft ist. Zudem ermöglicht das Halten des ferromagnetischen Elements in der Nut eine einfache und dennoch zuverlässige Kopplung desselben mit der Trägerkomponente.

In einer Ausgestaltung weist die Leuchteinheit für die Befestigung der Leuchteinheit mindestens einen Magneten, insbesondere einen Permanentmagneten, auf. Somit gelingt eine wirkungsvolle magnetische Befestigung der Leuchteinheit.

Vorzugsweise ist hierbei der Magnet streifenförmig ausgebildet. Mit einer streifenförmigen Ausbildung des Magneten kann ebenfalls vorteilhaft Platz gespart werden, insbesondere in der Dickenrichtung der Leuchteinheit.

Insbesondere kann der Magnet in einer Nut des Basisteils an dem Basisteil gehalten sein. Die Nut ermöglicht hierbei eine einfache und zuverlässige Kopplung des Magneten mit dem Basisteil.

In einer Ausgestaltung erstreckt sich die LED-Platine insbesondere quer, vorzugsweise im Wesentlichen senkrecht, zu dem Isolationselement.

Gemäß einer Weiterbildung steht das Isolationselement über einen Seitenrand des flachen Basisteils zu dem der LED-Platine benachbarten Schenkel der U-artigen Querschnittsform hin über. Auf diese Weise wird die Abschirm- und Isolationswirkung des Isolationselements weiter verbessert.

In einer weiteren Weiterbildung ist das Isolationselement mit einem elektrisch isolierenden Kunststoff ausgebildet. Insbesondere kann das Isolationselement mit einer Folie oder Schicht aus einem derartigen Kunststoff ausgebildet sein.

Gemäß einer Weiterbildung der Erfindung ist in dem Innenbereich ein plattenförmiges Lichtleiterelement im Wesentlichen parallel zu dem flachen Basisteil angeordnet, wobei die Lichterzeugungseinrichtung für eine seitliche Lichteinspeisung in das Lichtleiterelement einem Randbereich des Lichtleiterelements benachbart angeordnet ist. Mittels einer derartigen Seiteneinspeisung (auch Randeinkoppelung oder Seiteneinkoppelung genannt, sowie im Englischen als "edge lighting" bezeichnet) kann eine gute und gleichmäßige Leuchtwirkung der Leuchteinheit bei einer zugleich geringen Baugröße der Leuchteinheit in deren Dickenrichtung erreicht werden, zudem wird die benötigte Anzahl an Leuchtdioden (LEDs) verringert.

In einer Ausgestaltung weist die Leuchteinheit einen Reflektor zwischen dem flachen Basisteil und dem Lichtleiterelement auf. Somit kann das von den LEDs bereitgestellte und in das Lichtleiterelement eingespeiste Licht effizient für die gewünschte Leuchtwirkung genutzt werden, und Verluste können vermieden werden.

In einer Ausgestaltung ist das Isolationselement zwischen dem flachen Basisteil und dem Lichtleiterelement angeordnet und als ein Reflektor ausgebildet und/oder mit einem lichtreflektierenden Bestandteil, insbesondere einer lichtreflektierenden Schicht oder Beschichtung, versehen. Auf diese Weise kann vorteilhaft ein Bauelement die Funktionen des Isolationselements sowie des Reflektors übernehmen, was die Anzahl an Bauteilen der Beleuchtungsvorrichtung vermindert und den Zusammenbau der Leuchteinheit vereinfacht.

In einer Ausgestaltung ist einem Boden des Innenbereichs benachbart ein Freiraum gebildet, der dafür eingerichtet ist, bei Bedarf ein plattenförmiges optisches Element, insbesondere eine mikroprismatische Platte, aufzunehmen. Mittels einer mikroprismatischen Platte wird es möglich, den erzielten Beleuchtungseffekt zu variieren und/oder eine zusätzliche Entblendung bereitzustellen.

Gemäß einer bevorzugten Weiterbildung ist das zumindest abschnittsweise lichtdurchlässige Profilelement aus einem Kunststoffmaterial als das erste Material gefertigt.

Insbesondere kann in einer bevorzugten Weiterbildung das Kunststoffmaterial, aus dem das zumindest abschnittsweise lichtdurchlässige Profilelement gebildet ist, ein Polymethylmethacrylat (PMMA) sein.

Insbesondere mit einer Kombination eines aus einem Kunststoffmaterial gefertigten zumindest abschnittsweise lichtdurchlässigen Profilelements mit einem aus einem Metallmaterial gefertigten flachen Basisteil können Materialeigenschaften für das Profilelement und das Basisteil erzielt werden, die eine ausreichende Stabilität und zugleich gute Nachgiebigkeit der Leuchteinheit möglich machen.

In einer Ausgestaltung weisen das Basisteil und das zumindest abschnittsweise lichtdurchlässige Profilelement jeweils Verbindungseinrichtungen auf, welche einander korrespondierend zur formschlüssigen Verbindung des Basisteils und des Profilelements miteinander ausgebildet sind. Somit kann auf einfache Weise das Profilelement zuverlässig mit dem Basisteil verbunden werden.

In einer Ausgestaltung ist die Trägerkomponente als ein aus einem Metallmaterial gefertigtes Trägerprofil ausgebildet. Somit kann die Trägerkomponente mit der benötigten Stabilität ausgestattet werden.

Gemäß einer bevorzugten Weiterbildung kann das Metallmaterial, aus dem das Trägerprofil gebildet ist, Aluminium oder eine Aluminiumlegierung sein.

In einer Ausgestaltung ist die Trägerkomponente mit einem Aufnahmebereich zur Aufnahme der Leuchteinheit ausgebildet.

Gemäß einer Ausgestaltung ist die Leuchteinheit derart in der Trägerkomponente aufnehmbar und/oder an der Trägerkomponente befestigbar, dass die Leuchteinheit auf einer Sichtseite der Leuchteinheit mit der Trägerkomponente im Wesentlichen bündig ist. Eine derartige Beleuchtungsvorrichtung kann aus ästhetischer Sicht besonders ansprechend wirken.

In einer Ausgestaltung ist die Trägerkomponente dafür ausgebildet, an einem Bauwerk oder einer an einem Bauwerk befestigten Konstruktion fest montiert zu werden. Gemäß einer alternativen Ausgestaltung kann die Trägerkomponente dafür eingerichtet sein, an einem Bauwerk oder einer an einem Bauwerk befestigten Konstruktion hängend befestigt zu werden.

In Ausgestaltungen kann es sich bei der Konstruktion um eine Plattenkonstruktion, insbesondere eine Rigips-Plattenkonstruktion, oder eine Unterkonstruktion für diese handeln. Die Konstruktion kann insbesondere im Deckenbereich oder im Wandbereich angeordnet sein.

Insbesondere kann in einer Ausgestaltung der Erfindung die Trägerkomponente zum zumindest abschnittsweisen Einbau in die Plattenkonstruktion ausgebildet sein.

In einer Weiterbildung kann die Trägerkomponente ganz oder zumindest abschnittsweise als ein Einputzprofil ausgebildet sein.

Ferner kann in einer Weiterbildung die Beleuchtungsvorrichtung ein zusätzliches Einputzprofil aufweisen, in dem die Trägerkomponente abschnittsweise aufnehmbar ist, wobei die Trägerkomponente und das Einputzprofil für ein festes Befestigen der Trägerkomponente an dem zusätzlichen Einputzprofil eingerichtet sind.

In einer Ausgestaltung kann die Trägerkomponente dafür eingerichtet sein, in eine Ausnehmung in einer massiven Decke oder Wand fest eingebaut zu werden.

In weiteren Weiterbildungen kann das zusätzliche Einputzprofil zum zumindest abschnittsweisen Einbau in die Plattenkonstruktion ausgebildet oder dafür eingerichtet sein, in eine Ausnehmung in einer massiven Decke oder Wand fest eingebaut zu werden.

In einer weiteren Ausgestaltung kann die Trägerkomponente dafür eingerichtet sein, auf eine Plattenkonstruktion, insbesondere eine Rigips-Plattenkonstruktion, oder auf eine massive Wand oder Decke, aufmontiert zu werden.

In einer weiteren Ausgestaltung weist die Beleuchtungsvorrichtung Hängemittel zur hängenden Befestigung der Trägerkomponente auf. Bei dieser Ausgestaltung können die Trägerkomponente und die an der Trägerkomponente befestigte Leuchteinheit somit als abgehängte Leuchte dienen.

Mit den vorgenannten Weiterentwicklungen der Trägerkomponente, insbesondere für einen Einbau in eine Wand oder Decke oder Plattenkonstruktion oder für ein Aufmontieren auf eine Wand oder Decke oder Plattenkonstruktion oder für eine hängende Befestigung, kann vielfältigen Beleuchtungsanforderungen entsprochen werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht ausdrücklich genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Hierbei zeigen:
- Fig. 1: eine Beleuchtungsvorrichtung gemäß einem ersten Ausführungsbeispiel der Erfindung in einer Querschnittsansicht;
- Fig. 2: eine Beleuchtungsvorrichtung gemäß einem zweiten Ausführungsbeispiel der Erfindung in einer Querschnittsansicht;
- Fig. 3: eine Beleuchtungsvorrichtung gemäß einem dritten Ausführungsbeispiel der Erfindung in einer Querschnittsansicht;
- Fig. 4: eine Beleuchtungsvorrichtung gemäß einem vierten Ausführungsbeispiel der Erfindung in einer Querschnittsansicht;
- Fig. 5: eine Beleuchtungsvorrichtung gemäß einem fünften Ausführungsbeispiel der Erfindung in einer Querschnittsansicht;
- Fig. 6: eine Beleuchtungsvorrichtung gemäß einem sechsten Ausführungsbeispiel der Erfindung in einer Querschnittsansicht; und
- Fig. 7: eine Leuchteinheit einer Beleuchtungsvorrichtung gemäß dem ersten, zweiten, dritten, vierten oder fünften Ausführungsbeispiel in einer Explosionsansicht.

Die beiliegenden Zeichnungen sollen ein weiteres Verständnis der Ausführungsformen der vorliegenden Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

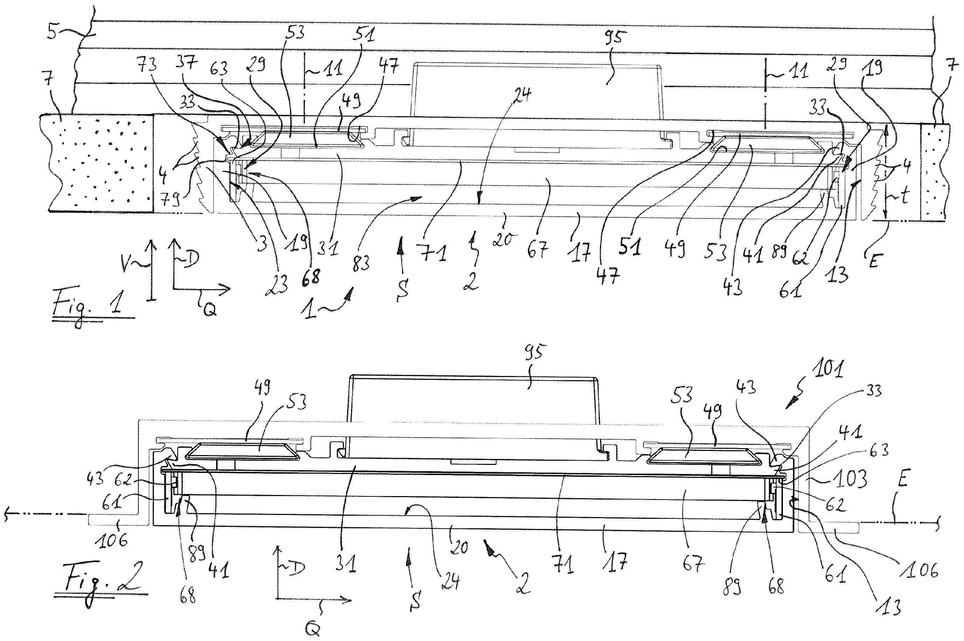

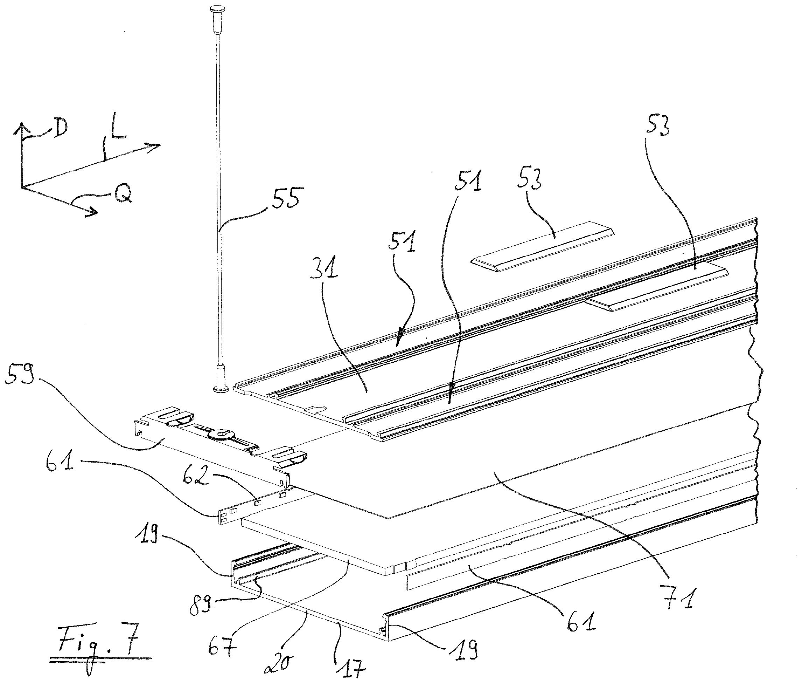

Eine Beleuchtungsvorrichtung 1 gemäß einem ersten Ausführungsbeispiel zeigt Fig. 1 im Querschnitt. Die Beleuchtungsvorrichtung 1 weist eine Leuchteinheit 2 auf, die flach und langgestreckt ausgebildet ist. In Fig. 1 sind eine Querrichtung Q und eine Dickenrichtung D der Leuchteinheit 2 eingezeichnet. Ferner weist die Beleuchtungsvorichtung 1 eine profilförmige Trägerkomponente 3 auf. Eine Längsrichtung L der Beleuchtungsvorrichtung 1, die im Zustand der Fig. 1 auch einer Längsrichtung der Leuchteinheit 2 und einer Längsrichtung der Trägerkomponente 3 entspricht, ist in Fig. 1 projizierend ausgerichtet und in Fig. 7 erkennbar.

Die Trägerkomponente 3 ist als ein Trägerprofil ausgebildet und aus einem Metallmaterial, etwa Aluminium oder einer Aluminiumlegierung, gefertigt, mit einem entlang der Längsrichtung im Wesentlichen konstanten Querschnitt gebildet und zum Beispiel stranggepresst. Im Querschnitt der Fig. 1 weist die Trägerkomponente 3 eine nach unten geöffnete, U-förmige Querschnittsform auf.

In Fig. 1 ist die Trägerkomponente 3 unmittelbar an Schienen 5 einer Unterkonstruktion einer abgehängten Zwischendecke, die als eine Plattenkonstruktion mit Plattenelementen 7 gebildet ist, befestigt. Die Trägerkomponente 3 ist hierbei innerhalb der Dickenerstreckung oder Stärke der Plattenelemente 7 aufgenommen, wobei eine Abmessung t der Trägerkomponente 3 in Dickenrichtung D zum Beispiel t ≈ 13 mm betragen kann. Bei den Plattenelementen 7 kann es sich beispielhaft um Rigips-Plattenelemente handeln. Die feste Anbindung der Trägerkomponente 3 an die Schienen 5, von denen in Fig. 1 nur eine beispielhaft dargestellt ist, kann mittels nur schematisch eingezeichneter Schrauben 11 erfolgen. Die Trägerkomponente 3 ist somit fest mit der Unterkonstruktion der Zwischendecke verbunden, die ihrerseits an einem nicht näher dargestellten Bauwerk, insbesondere an einer massiven Rohdecke, befestigt ist. Eine Ebene E (in Fig. 1 doppelt-strichpunktiert gezeichnet) bildet in Fig. 1 die einem Raum zugewandte Außenseite der Zwischendecke. Nach Befestigen der Trägerkomponente 3 an den Schienen 5 kann die Trägerkomponente 3 von der Außenseite der Zwischendecke her eingeputzt werden, um einen sauberen Anschluß an die Plattenelemente 7 zu erzielen. Hierzu ist die Trägerkomponente 3 in Fig. 1 als ein Einputzprofil ausgebildet und an nach außen gewandten Seiten mit einer Vielzahl von Zähnen 4 versehen, die die Verbindung von Putz und Trägerkomponente 3 verbessern.

Die Trägerkomponente 3 weist einen Aufnahmebereich 13 auf, in dem die Leuchteinheit 2 derart aufgenommen ist, dass die Leuchteinheit 2 auf einer Sichtseite S der Leuchteinheit 2 mit der Trägerkomponente 3 bündig abschließt. Die Trägerkomponente 3 und die Leuchteinheit 2 enden somit in vertikaler Richtung, parallel zur Dickenrichtung D, auf Höhe der Ebene E. Die Leuchteinheit 2 kann in Fig. 1 als ein Einsatz angesehen werden, der in die Trägerkomponente 3 eingesetzt werden kann.

Die Leuchteinheit 2 weist ein lichtdurchlässiges Profilelement 17 auf, dessen Querschnittsform im Wesentlichen U-artig mit zwei einander gegenüberliegenden Schenkeln 19 und einem im Wesentlichen ebenen Bodenabschnitt 20 ausgebildet ist. Die Schenkel 19 erstrecken sich in Dickenrichtung D. Die Leuchteinheit 2 ist dafür eingerichtet, Licht im Wesentlichen im Bereich des Bodenabschnitts 20 durch diesen hindurch abzugeben. Durch die U-artige Querschnittsform des Profilelements 17 ist ein Innenbereich 23 des Profilelements 17 gebildet, in welchem Lichterzeugungseinrichtungen 29 angeordnet sind. Mittels der Lichterzeugungseinrichtungen 29 kann im Betrieb das durch die Leuchteinheit 2 abzugebende Licht bereitgestellt werden.

Das lichtdurchlässige Profilelement 17 ist als ein Profil aus einem Kunststoffmaterial, insbesondere Polymethylmethacrylat (PMMA) gefertigt.

Die Leuchteinheit 2 weist ferner ein flaches Basisteil 31 auf, welches als ein flaches Basisprofil ausgebildet und aus einem Metallmaterial gefertigt ist, insbesondere aus Aluminium oder einer Aluminiumlegierung.

Zwischen den Schenkeln 19 des Profilelements 17 ist eine Öffnung 37 ausgebildet. Das Basisteil 31 ist im Bereich der Öffnung 37 angeordnet, mit dem Profilelement 17 gekoppelt, und verschließt im Wesentlichen die Öffnung 37.

Das Basisteil 31 ist im Bereich seiner entgegengesetzten Längsränder mit jeweils einem rippenartigen Vorsprung 41 ausgestattet. Hingegen sind die Schenkel 19 in ihren Endbereichen, die die Öffnung 37 begrenzen, ebenfalls jeweils mit einem sich längs der Längsrichtung L des Profilelements 17 entlang der Öffnung 37 erstreckenden Vorsprung 43 ausgebildet. Während die Vorsprünge 41 in Querrichtung Q der Leuchteinheit 2 nach außen weisen, zeigen die Vorsprünge 43 in Querrichtung Q nach innen, zur Mitte der Öffnung 37 hin. Die Vorsprünge 41 und 43 sind als Verbindungseinrichtungen zur formschlüssigen Verbindung des lichtdurchlässigen Profilelements 17 und des flachen Basisteils 31 ausgebildet. Jeweils ein Vorsprung 41 ist hierbei korrespondierend zu einem Vorsprung 43 ausgebildet. Beim Zusammensetzen von Basisteil 31 und Profilelement 17 können diese miteinander verrasten und sind auf diese Weise zuverlässig aneinander gehalten.

Die Leuchteinheit 2 ist in Fig. 1 mittels Magnetkraft lösbar und somit austauschbar an der Trägerkomponente 3 befestigt. Hierzu sind basisteilseitige und trägerkomponentenseitige Einrichtungen vorgesehen.

Die Trägerkomponente 3 weist zwei parallele Nuten 47 auf, die dem Aufnahmebereich 13 zugewandt in Längsrichtung L der Trägerkomponente 3 verlaufen. Für die magnetische Befestigung der Leuchteinheit 2 ist in jeder der Nuten 47 ein langgestrecktes, blatt- oder streifenartiges ferromagnetisches Element 49 angeordnet. Das ferromagnetische Element 49 erstreckt sich jeweils im Wesentlichen über die gesamte Länge der Trägerkomponente 3 in deren Längsrichtung. Mittels einer umgekehrt T-förmigen Gestaltung jeder der flachen Nuten 47, siehe Fig. 1, ist das ferromagnetische Element 49 an der Trägerkomponente 3 zuverlässig gehalten. Jedes der beiden ferromagnetischen Elemente 49 ist bevorzugt als ein Stahlblatt ausgebildet und in die jeweilige Nut 47 eingeschoben.

Die ferromagnetischen Elemente 49 weisen in der Dickenrichtung D nur eine geringe Ausdehnung im Vergleich mit ihrer Ausdehnung in Querrichtung Q auf und benötigen somit nur wenig Platz, insbesondere in der Dickenrichtung D. Für eine flache Gestaltung der Leuchteinheit 2 ist dies von Vorteil.

Das flache Basisteil 31 ist auf einer von dem Profilelement 17 und von dessen Innenbereich 23 weggewandten und im Zustand der Fig. 1 zu den ferromagnetischen Elementen 49 hingewandten Seite, in Fig. 1 der Oberseite des Basisteils 31, mit zwei parallelen Nuten 51 versehen. In jeder der Nuten 51 ist ein Permanentmagnet 53 angeordnet. Die beiden Permanentmagneten 53 dienen der Befestigung der Leuchteinheit 2 an der Trägerkomponente 3, indem die Permanentmagneten 53 an den ferromagnetischen Elementen 49 magnetisch anhaften.

Jeder der Permanentmagneten 53 ist streifenförmig ausgebildet, erstreckt sich jedoch in Längsrichtung L der Leuchteinheit 2 nicht über die Gesamtlänge der Leuchteinheit 2. Wenngleich in den Fig. 1 und 7 nur zwei Permanentmagneten 53 gezeigt sind, kann die Leuchteinheit 2 in Abständen entlang ihrer Längsrichtung z. B. mit Paaren von Permanentmagneten 53 ausgestattet sein, etwa derart, dass die Leuchteinheit 2 vier oder sechs oder acht oder noch mehr Permanentmagnete 53 aufweist.

Die streifenförmige Gestaltung der Permanentmagneten 53 ermöglicht wiederum eine Platzersparnis in Dickenrichtung D der Leuchteinheit 2. Im Querschnitt, siehe Fig. 1, sind die Permanentmagneten 53 trapezförmig ausgeführt. Die Nuten 51 sind jeweils hinterschnitten und zur Trapezform der Permanentmagneten 53 korrespondierend ausgebildet, derart, dass die Permanentmagneten 53 jeweils in der zugeordneten Nut 51 zuverlässig formschlüssig am Basisteil 31 gehalten sind.

Die Permanentmagneten 53 dienen somit als basisteilseitige und die ferromagnetischen Elemente 49 als trägerkomponentenseitige Einrichtungen, wobei basisteilseitige und trägerkomponentenseitige Einrichtungen zur Befestigung der Leuchteinheit 2 an der Trägerkomponente 3 zusammenwirken.

Die Lichterzeugungseinrichtungen 29 weisen jeweils eine LED-Platine 61 auf, die mit Leuchtdioden (LEDs) 62 bestückt ist. In Fig. 1 weist die Leuchteinheit 2 zwei LED-Platinen 61 auf, die in dem Innenbereich 23 jeweils einem der Schenkel 19 benachbart angeordnet sind. Jede der bestückten LED-Platinen 61 wird vorzugsweise von einer Stirnseite des Profilelements 17 in dessen Innenbereich 23 eingeschoben.

In dem Innenbereich 23 ist ferner ein plattenförmiges Lichtleiterelement 67 parallel zu dem Basisteil 31 angeordnet. Im Querschnitt der Fig. 1 erstreckt sich das Lichtleiterelement 67 zudem parallel zu dem Bodenabschnitt 20 der Querschnittsform des lichtdurchlässigen Profilelements 17. Das Lichtleiterelement 67 kann beispielsweise mit gelaserten Punkten versehen sein und/oder bedruckt und/oder geprägt sein. Mittels der LEDs 62 wird Licht seitlich in Randbereichen 68 des Lichtleiterelements 67 in dieses eingespeist. Dies wird auch als Rand- oder Seiteneinkoppelung bezeichnet. Die LED-Platinen 61 sind hierfür den Randbereichen 68 benachbart angeordnet. Bei geringer Baugröße in Dickenrichtung D und zudem mit einer relativ geringen Anzahl an benötigten LEDs 62 wird eine gleichmäßige Leuchtwirkung durch die Leuchteinheit 2 im Bereich des Bodenabschnitts 20 erzielt.

Zwischen dem Basisteil 31 und dem Lichtleiterelement 67 ist parallel zu diesen auf einer dem Innenbereich 23 zugewandten Seite des Basisteils 31 ein Isolationselement 71 angeordnet, welches einen Abstand zwischen dem Basisteil 31 und dem Lichtleiterelement 67 im Wesentlichen ausfüllt. Mittels des Isolationselements 71 wird das Basisteil 31 gegenüber den LED-Platinen 61 elektrisch isolierend abgeschirmt. Hierdurch wird ein elektrischer Kontakt der LED-Platinen 61 mit dem Basisteil 31 unterbunden. Dies ist von Vorteil, wenn die Leuchteinheit 2 mit elektrischem Strom bei relativ hohen Spannungen, beispielsweise oberhalb der maximal zulässigen Berührspannung, betrieben werden soll.

Das Isolationselement 71 ist mit einer Folie mit einem elektrisch isolierenden Kunststoffmaterial ausgebildet. Durch das Isolationselement 71 wird somit eine elektrisch isolierende Kunststoffschicht zwischen dem flachen Basisteil 31 und den LED-Platinen 61 geschaffen.

Das Isolationselement 71 ist zudem als ein Reflektor ausgebildet, weist also zusätzlich zu seiner Isolationsfunktion auch eine Reflexionswirkung auf. Durch die Ausbildung als Reflektor sorgt das Isolationselement 71 dafür, dass das von den LEDs 62 erzeugte Licht in gewünschter Weise im Wesentlichen durch den Bodenabschnitt 20 abgestrahlt wird und Verluste vermieden werden.

Hierzu kann die Kunststofffolie des Isolationselements 71 mit einer lichtreflektierenden Schicht oder Beschichtung versehen sein. Somit weist das Isolationselement 71 in einem folienförmigen Bauteil eine elektrisch isolierende Kunststoffschicht und eine lichtreflektierende Schicht auf.

Jede der LED-Platinen 61 ist im Wesentlichen senkrecht zu dem Isolationselement 71 einem zugeordneten Randbereich 73 des Isolationselements 71 benachbart angeordnet, wobei sich die LED-Platinen 61 jeweils im Wesentlich entlang der Dickenrichtung D der Leuchteinheit 2 und somit parallel zu den Schenkeln 19 erstrecken.

Hierbei steht das Isolationselement 71 parallel zur Querrichtung Q und somit jeweils quer zu jeder der LED-Platinen 61 außenseitig, zu dem jeweils benachbarten Schenkel 19 hin, über einen Rand 63 der LED-Platine 61 über. Auf diese Weise wird der Weg, den eventuelle Kriechströme von der LED-Platine 61 zum Basisteil 31 zurückzulegen haben, vergrößert, der Weg des eventuellen Kriechstroms führt nun um den Randbereich 73 des Isolationselements 71 herum. Kriechströme werden somit verhindert oder hinreichend gering gehalten, bei gleichzeitig geringem Abstand zwischen den Platinen 61 und dem Basisteil 31 und somit flacher und kompakter Bauform der Leuchteinheit 2.

Ferner steht das Isolationselement 71 auch beidseits über einen Seitenrand 33 des flachen Basisteils 31 in Richtung zu den Schenkeln 19 der U-artigen Querschnittsform, denen die LED-Platinen 61 benachbart sind, über. Zudem ist, siehe Fig. 1, in jedem der Schenkel 19 auf deren dem Innenbereich 23 zugewandter Seite eine Nut 79 vorgesehen. In beiden entgegengesetzten Randbereichen 73 erstreckt sich das Isolationselement 71 jeweils in eine der Nuten 79 hinein. Auf diese Weise kann die abschirmende und isolierende Wirkung des Isolationselements 71 weiter gesteigert werden.

Einem Boden 24 des Innenbereichs 23, der durch eine dem Innenbereich 23 zugewandte Oberfläche des Profilelements 17 im Bereich des Bodenabschnitts 20 gebildet ist, benachbart ist ein Freiraum 83 ausgebildet. In dem Freiraum 83 kann bei Bedarf ein in den Figuren nicht näher dargestelltes plattenförmiges optisches Element, insbesondere eine mikroprismatische Platte, aufgenommen werden, um den erzielten Beleuchtungseffekt zu variieren und/oder eine zusätzliche Entblendung zu ermöglichen. Zur Bildung des Freiraums 83 weist das lichtdurchlässige Profilelement 17 zwei von dem Boden 24 abstehende Rippen 89 auf, die jeweils einem der Schenkel 19 benachbart verlaufen, jedoch kürzer sind als die Schenkel 19. Auf den Rippen 89, siehe Fig. 1, liegt das Lichtleiterelement 67 nahe den Randbereichen 68 desselben auf, wodurch ein Abstand zum Boden 24 geschaffen und der Freiraum 83 ermöglicht wird. Zwischen jeweils einem Schenkel 19 und der diesem Schenkel 19 benachbarten Rippe 89 ist zudem die LED-Platine 61 angeordnet, wobei die Rippe 89 eine zusätzliche Führung und zusätzlichen Halt für die LED-Platine 61 bieten kann.

Wenngleich das Profilelement 17 die Rippen 89, die Nuten 79 und die Vorsprünge 43 aufweist, ist dennoch die Querschnittsform des Profilelements 17 in ihrer Gesamtheit, also als Ganzes, im Wesentlichen U-artig ausgebildet.

Die Leuchteinheit 2 ist bei allen in Bezug auf die Figuren 2-5 weiter unten beschriebenen zweiten bis fünften Ausführungsbeispielen in gleicher Weise ausgebildet wie vorstehend und im Folgenden zu dem ersten Ausführungsbeispiel erläutert. Es wird betreffend die Leuchteinheit 2 ergänzend auf die Fig. 2-5 verwiesen, in denen Details der Leuchteinheit 2 der besseren Übersicht in Fig. 1 halber ergänzend mit Bezugszeichen versehen sind.

Zur Gestaltung der Leuchteinheit 2 sei zudem auf die Explosionsansicht der Fig. 7 verwiesen, die insbesondere auch die im Vergleich zur Gesamtlänge der Leuchteinheit 2 kürzere Ausbildung der Permanentmagneten 53 zeigt. In Fig. 7 ist darüber hinaus ein stirnseitiger Enddeckel 59 für die Leuchteinheit 2 sowie eine Absturzsicherung 55 eingezeichnet. Ferner ist in Fig. 7 zusätzlich die Längsrichtung L eingezeichnet, womit im eingesetzten Zustand der Fig. 1 sowohl die Längsrichtung der (in Fig. 7 nicht komplett gezeigten) Beleuchtungsvorrichtung 1 als auch die Längsrichtung der Leuchteinheit 2 und die Längsrichtung der (in Fig. 7 nicht sichtbaren) Trägerkomponente 3 gemeint sein soll.

Bei dem ersten Ausführungsbeispiel der Fig. 1 ist die als Einputzprofil ausgebildete Trägerkomponente 3 mit einer massiven Decke vermittelt über die Schienen 5 fest verbunden, zum Beispiel mit Kraft an den Schienen 5 fest angeschraubt. Kommt es im Bauwerk zu Setzungsvorgängen, wie sie insbesondere bei Neubauten auftreten können, so kann es im zulässigen Rahmen zu einer Verformung und insbesondere einer Absenkung der massiven Decke, zum Beispiel in der Größenordnung einiger Millimeter, kommen. Die feste Verbindung von Trägerkomponente 3 und (in Fig. 1 nicht dargestellter) Bauwerk kann in einem solchen Fall zu einer Verformung der Trägerkomponente 3, etwa einer Verbiegung und/oder einem Verziehen, führen.

Durch die Ausbildung des lichtdurchlässigen Profilelements 17 aus einem Kunststoffmaterial in Kombination mit der Ausbildung des Basisteils 31 aus einem Metallmaterial kann der Leuchteinheit 2 eine Nachgiebigkeit und Flexibilität verliehen werden, die eine Anpassung der Leuchteinheit 2 an derartige Verformungen möglich macht.

Das Kunststoffmaterial des Profilelements 17 bildet hierbei ein erstes Material und das Metallmaterial des Basisteils 31 bildet ein zweites Material, wobei das erste Material einer elastischen Verformung weniger Widerstand entgegensetzt als das zweite Material. Der Elastizitätsmodul des ersten Materials ist somit geringer als der Elastizitätsmodul des zweiten Materials. Wird, wie für das Ausführungsbeispiel der Fig. 1 bevorzugt, als erstes Material ein Polymethylmethacrylat (PMMA) und als zweites Material eine Aluminiumlegierung verwendet, so wird beispielsweise der Elastizitätsmodul der Aluminiumlegierung um einen Faktor von ca. 20 oder mehr größer als der Elastizitätsmodul des PMMA sein. Unter Berücksichtigung der unterschiedlichen Flächenträgheitsmomente des Profilelements 17 und des Basisteils 31 kann durch die relativ flache Ausbildung des Basisteils 31 eine hinreichende Nachgiebigkeit der Leuchteinheit 2 in ihrer Gesamtheit erzielt werden. Die U-artige Querschnittsform des Profilelements 17 führt hierbei nicht zu einer übermäßigen Steigerung der Steifigkeit der Leuchteinheit 2. Zugleich werden mittels der Magneten 53 die zur Befestigung und zum Halten der Leuchteinheit 2 nötigen Kräfte in ein stabiles Metallbauteil eingeleitet.

Die magnetische Befestigung der Leuchteinheit 2 an der Trägerkomponente 3 weist hierbei in Kombination mit der Flexibilität der Leuchteinheit 2 den Vorteil auf, dass ein Lösen der Befestigung bei Geometrieänderungen der Trägerkomponente 3 vermieden wird. Die Nachgiebigkeit der Leuchteinheit 2 vermeidet übermäßige Spannungen in dieser, Befestigungsstellen werden somit weniger belastet, und die Magneten 53 bleiben zuverlässig an den ferromagnetischen Elementen 49 haften. Zudem lässt die magnetische Befestigung Verschiebungen zwischen Trägerkomponente 3 und Leuchteinheit 2, die sich aufgrund der Verformung der Trägerkomponente 3 ergeben können, zu, ohne dass sich die Befestigung löst.

Das Ausführungsbeispiel der Fig. 1 ist daher nicht nur im Falle von Setzungsvorgängen in einem Bauwerk vorteilhaft, sondern es kann zudem auch eine verbesserte Beständigkeit gegenüber Vibrationen erreicht werden, d.h. z. B. im Falle einer schwingenden Verformung der Trägerkomponente 3. Dies kann zum Beispiel beim Einsatz der Beleuchtungsvorrichtung 1 in Umgebungen, in denen Vibrationen und Erschütterungen häufiger auftreten, nützlich sein, da auf diese Weise insbesondere die Sicherheit der Befestigung gesteigert werden kann.

Bei dem ersten Ausführungsbeispiel der Fig. 1 ist eine elektrische Anschlusseinrichtung 95 der Leuchteinheit 2, etwa ein Anschlusskasten, komplett in oder hinter der mit den Plattenelementen 7 gebildeten Zwischendecke verborgen. Die Leuchteinheit 2 der Beleuchtungsvorrichtung 1 kann zum Beispiel zusammen mit einem (nicht dargestellten) Deckeneinwurfkonverter, der außerhalb der Leuchteinheit 2 angeordnet ist, betrieben werden.

Bei einer Variante des Ausführungsbeispiels der Fig. 1 kann die Trägerkomponente 3 dafür ausgebildet sein, in eine in der Figur nicht dargestellte Ausnehmung in einer massiven Decke oder Wand eingebaut und fest in der Ausnehmung fixiert zu werden. Analog zur Darstellung in Fig. 1 kann durch Einputzen ein bündiger Abschluss in der Ebene E, die in diesem Falle die Oberfläche der massiven Decke oder Wand illustriert, erreicht werden.

Die Befestigung der Leuchteinheit 2 an der Trägerkomponente erfolgt bei den zweiten bis fünften Ausführungsbeispielen in gleicher Weise und mit den oben genannten Vorteilen mittels Magnetkraft wie bei dem ersten Ausführungsbeispiel. Es wird hinsichtlich der Ausbildung der Leuchteinheit 2 und deren Kopplung mit der Trägerkomponente auf die obigen Ausführungen zum ersten Ausführungsbeispiel verwiesen.

Fig. 2 zeigt eine Beleuchtungsvorrichtung 101 gemäß einem zweiten Ausführungsbeispiel. Die Beleuchtungsvorrichtung 101 weist eine Trägerkomponente 103 auf und unterscheidet sich von der Beleuchtungsvorrichtung 1 darin, dass die Trägerkomponente 103 nicht als ein Einputzprofil ausgebildet ist, sondern Flansche 106 aufweist, die nach Einbau der Trägerkomponente 103 in eine abgehängte Zwischendecke, welche eine Plattenkonstruktion bildet, sichtbar bleiben, wobei die Flansche 106 auf der Außenseite der Zwischendecke, in Fig. 2 durch die Ebene E schematisch dargestellt, aufliegen. Wie bei dem ersten Ausführungsbeispiel ist die Trägerkomponente 103 als ein Trägerprofil aus einem Metallmaterial, etwa Aluminium oder einer Aluminiumlegierung, gebildet, zum Beispiel stranggepresst. Hinsichtlich der Befestigung der Trägerkomponente 103 an einer Unterkonstruktion einer Zwischendecke wird auf die obigen Erläuterungen zum ersten Ausführungsbeispiel verwiesen.

Alternativ kann die Trägerkomponente 103 gemäß Fig. 2 dafür eingerichtet sein, in eine in der Figur nicht dargestellte Ausnehmung in einer massiven Decke oder Wand eingebaut und fest in der Ausnehmung fixiert zu werden, wobei dann die Flansche 106 auf der Oberfläche der massiven Decke oder Wand, die dann in diesem Falle durch die Ebene E gebildet ist, analog der Darstellung in Fig. 2 aufliegen.

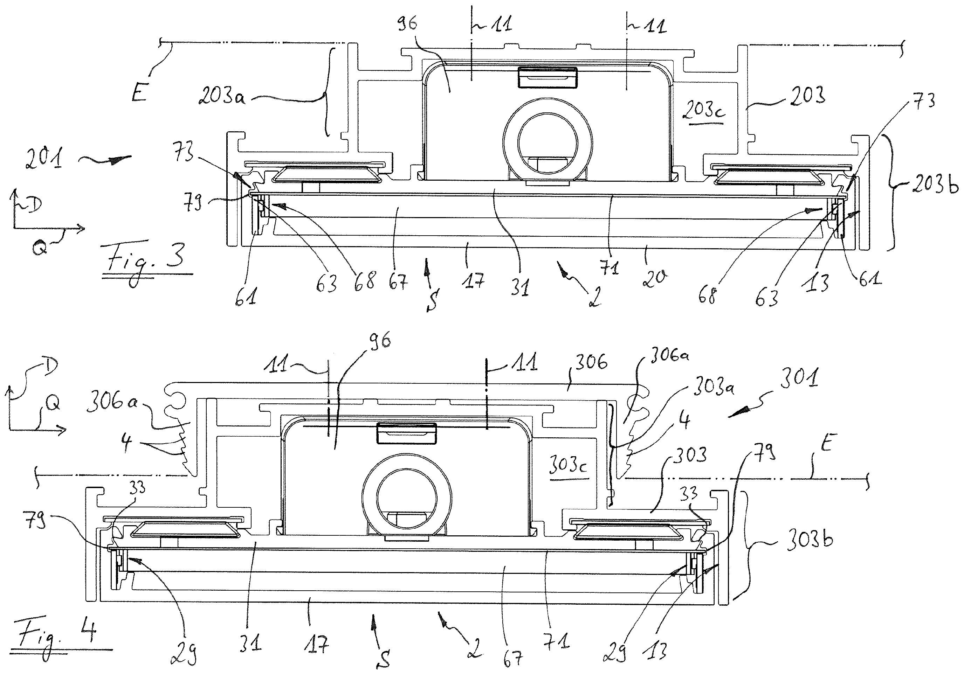

Eine Beleuchtungsvorrichtung 201 gemäß einem dritten Ausführungsbeispiel ist in Fig. 3 gezeigt. Die Beleuchtungsvorrichtung 201 weist eine Trägerkomponente 203 auf und unterscheidet sich von der Beleuchtungsvorrichtung 1 dadurch, dass die Trägerkomponente 203 dafür eingerichtet ist, auf eine Decke, bei der es sich um eine massive Decke oder eine Zwischendecke als Plattenkonstruktion handeln kann, aufmontiert zu werden. In diesem Falle erstreckt sich somit kein Abschnitt der Trägerkomponente 203 in die Decke oder Zwischendecke hinein. Eine Ebene E in Fig. 3 illustriert die sichtbare Außenseite der massiven Decke oder der Zwischendecke. Die Trägerkomponente 203 kann beispielsweise durch Verschrauben fest mit der massiven Decke oder einer Unterkonstruktion der Zwischendecke verbunden werden. Alternativ kommt eine Befestigung im Wandbereich in Betracht. Schrauben 11 sind in Fig. 3 beispielhaft gezeigt. Die Beleuchtungsvorrichtung 201 sitzt somit als ganzes auf der Decke oder Wand oder Plattenkonstruktion auf.

Wie bei den vorangehenden Ausführungsbeispielen ist die Trägerkomponente 203 als ein Trägerprofil aus einem Metallmaterial, etwa Aluminium oder einer Aluminiumlegierung, gefertigt, zum Beispiel durch Strangpressen. Die Trägerkomponente 203 weist jedoch einen ersten Abschnitt 203a und einen zweiten Abschnitt 203b auf, wobei der zweite Abschnitt 203b mit dem Aufnahmebereich 13 für die Leuchteinheit 2 ausgebildet ist und der erste Abschnitt 203a als Fuß für die Befestigung der Trägerkomponente 203 an der Decke dient. Der erste Abschnitt 203a weist zudem einen Innenraum 203c auf, in dem ein mit der Leuchteinheit 2 verbundener Konverter 96 untergebracht ist.

Eine Beleuchtungsvorrichtung 301 gemäß einem vierten Ausführungsbeispiel zeigt die Fig. 4. Die Beleuchtungsvorrichtung 301 weist eine Trägerkomponente 303 auf, die in gleicher Weise ausgebildet ist wie die Trägerkomponente 203 der Fig. 3 und einen ersten Abschnitt 303a sowie einen zweiten Abschnitt 303b aufweist. Wiederum weist der zweite Abschnitt 303b den Aufnahmebereich 13 für die Leuchteinheit 2 auf, während ein Konverter 96 in einem Innenraum 303c des ersten Abschnitts 303a aufgenommen ist. Jedoch unterscheidet sich die Beleuchtungsvorrichtung 301 von der Beleuchtungsvorrichtung 201 dadurch, dass der erste Abschnitt 303a abschnittsweise innerhalb eines umgekehrt U-förmigen Einputzprofils 306 zwischen dessen Schenkeln 306a aufgenommen ist. Das Einputzprofil 306 kann zum Beispiel im Bereich einer Zwischendecke angeordnet und an einer Unterkonstruktion der Zwischendecke, analog zur Befestigung der Trägerkomponente 3 der Fig. 1, fest montiert sein. Eine Ebene E, die die Außenseite der Zwischendecke bildet, ist in Fig. 4 zur Illustration eingezeichnet. Durch Einputzen des Einputzprofils 306, welches für ein besseres Anhaften des Putzes an Außenseiten der Schenkel 306a Zähne 4 aufweist, wird ein sauberer Übergang im Bereich der Enden der Schenkel 306a erreicht.

Ein Teilbereich des ersten Abschnitts 303a sitzt somit bei dem vierten Ausführungsbeispiel innerhalb des Einputzprofils 306 zwischen den Schenkeln 306a. Die Trägerkomponente 303 ist fest mit dem Einputzprofil 306 verbunden, beispielsweise durch Verschrauben. Schrauben 11 zur Bildung einer derartigen festen Verbindung sind in Fig. 4 beispielhaft angedeutet. Die Trägerkomponente 303 ist somit in Fig. 4 mit einem Bauwerk vermittelt über das Einputzprofil 306 und zum Beispiel die Unterkonstruktion der Zwischendecke fest verbunden. Elektronische und elektrische Komponenten in Form des Konverters 96 können bei dem vierten Ausführungsbeispiel somit zumindest abschnittsweise in der Decke versteckt werden, im Unterschied zu Fig. 3.

Die Trägerkomponente 303 ist wiederum als ein Trägerprofil aus einem Metallmaterial, etwa Aluminium oder einer Aluminiumlegierung, gefertigt, zum Beispiel durch Strangpressen. Auch das Einputzprofil 306 ist bevorzugt aus einem Metallmaterial, etwa Aluminium oder einer Aluminiumlegierung, hergestellt, zum Beispiel stranggepresst.

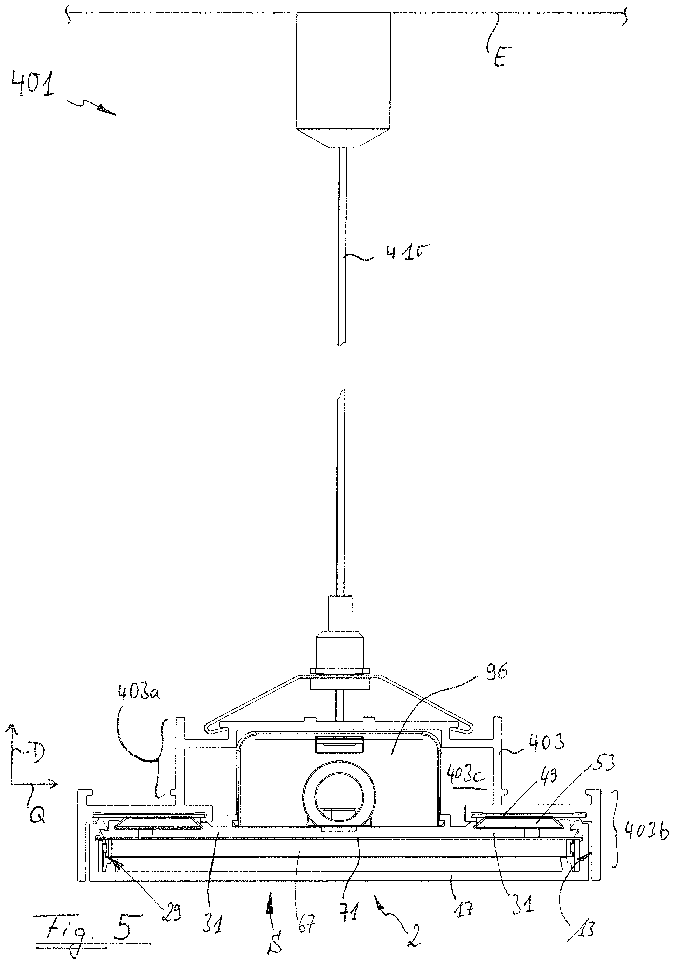

Eine Beleuchtungsanordnung 401 gemäß einem fünften Ausführungsbeispiel zeigt Fig. 5. Die Beleuchtungsanordnung 401 weist eine Trägerkomponente 403 auf, die in gleicher Weise wie die Trägerkomponente 203 oder 303 der Fig. 3 bzw. 4 ausgebildet ist. Bei dem fünften Ausführungsbeispiel ist die Trägerkomponente 403 mittels geeigneter Hängemittel 410, die zum Beispiel Seile und/oder Stangen oder Stäbe beinhalten können, im Deckenbereich hängend befestigt. Die Befestigung kann hierbei zum Beispiel an einer massiven Decke oder einer an der Massivdecke befestigten Konstruktion (nicht dargestellt) erfolgen. Eine Deckenebene E ist wiederum in Fig. 5 eingezeichnet. Es versteht sich, dass die Beleuchtungsvorrichtung 401 eine relativ große Länge aufweisen kann und entlang der in Fig. 5 projizierenden Längsrichtung derselben mittels einer Vielzahl von Hängemitteln 410 von der Decke abgehängt sein kann.

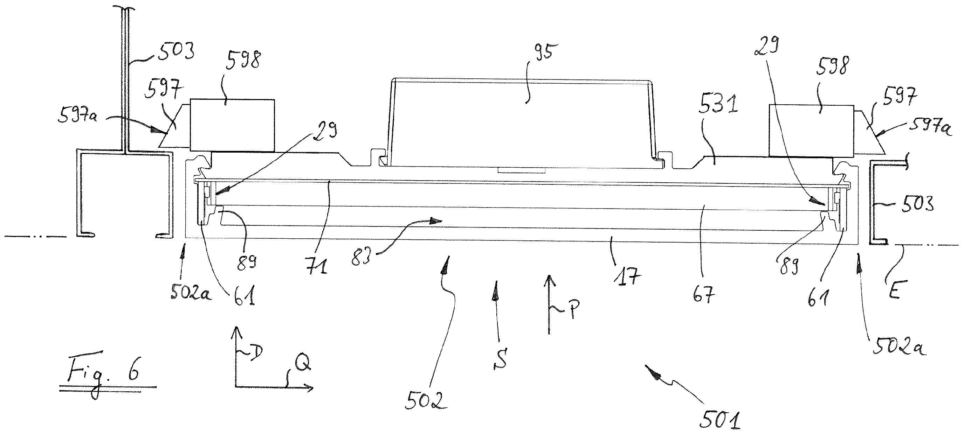

Fig. 6 zeigt eine Beleuchtungsvorrichtung 501 gemäß einem sechsten Ausführungsbeispiel. Die Beleuchtungsvorrichtung 501 weist eine Leuchteinheit 502 sowie zwei profilförmige Trägerkomponenten 503 auf, wobei die Leuchteinheit 502 zwischen den beiden Trägerkomponenten 503 angeordnet und an den Trägerkomponenten 503 befestigt ist. Die beiden Trägerkomponenten 503 sind als Deckenprofilelemente einer Tragkonstruktion für eine (in ihrer Gesamtheit in Fig. 6 nicht gezeigte) Rasterdecke ausgebildet und verlaufen parallel zueinander und beispielhaft im Wesentlichen in horizontaler Richtung.

Die Leuchteinheit 2 ist, mit Ausnahme des flachen Basisteils und basisteilseitiger Einrichtungen zur Befestigung der Leuchteinheit 502 an den Trägerkomponenten 503, in gleicher Weise ausgebildet wie zu den vorstehenden Ausführungsbeispielen der Erfindung beschrieben, so dass auf die obigen Ausführungen zur Leuchteinheit 2 verwiesen werden kann.

Statt des flachen Basisteils 31, wie es vorstehend im Detail beschrieben wurde, weist die Leuchteinheit 502 ein flaches Basisteil 531 auf. Das Basisteil 531 unterscheidet sich von dem Basisteil 31 der Leuchteinheit 2 dahingehend, dass das Basisteil 531 statt der Magneten 53 bewegbare Schnapper 597 aufweist. Jeder der Schnapper 597 ist in einem Schnappergehäuse 598 derart geführt, dass der Schnapper 597 in Querrichtung Q verschiebbar ist. Die Schnapper 597 sind jeweils federbelastet, derart, dass in Abwesenheit äußerer auf die Schnapper 597 einwirkender Kräfte die Schnapper 597 nach außen über entgegengesetzte, seitliche Längsränder 502a der Leuchteinheit 502 hinausstehen. Jeder der Schnapper 597 kann entgegen einer Federkraft in sein zugeordnetes Schnappergehäuse 598 zurückgedrückt werden.

Zur Befestigung der Leuchteinheit 502 an den Trägerkomponenten 503 wird die Leuchteinheit 502 in Pfeilrichtung P, siehe Fig. 6, zwischen die Trägerkomponenten 503 eingesetzt, wobei jeweils eine Gleitrampe 597a des Schnappers 597 mit einer der Trägerkomponenten 503 in Kontakt kommt. Dies bewirkt, dass bei fortgesetztem Einführen der Leuchteinheit 502 zwischen die Trägerkomponenten 503 die Schnapper 597 jeweils in das Schnappergehäuse 598 zurückgedrückt werden. Nach Passieren eines T-artig erweiterten Abschnitts der Trägerkomponenten 503 schnappen die Schnapper 597 hinter den Abschnitt der Trägerkomponenten 503 ein, wodurch die Leuchteinheit 502 zuverlässig formschlüssig an den Trägerkomponenten 503 befestigt ist.

Schnappergehäuse 598 mit jeweils einem darin angeordneten Schnapper 597 können entlang der in Fig. 6 projizierenden Längsrichtung der Leuchteinheit 502 in Abständen an dem flachen Basisteil 531 befestigt sein. Kommt es bei der Beleuchtungsvorrichtung 501 der Fig. 6 durch Setzungsvorgänge oder anderweitig bedingt zu Verformungen der Trägerkomponenten 503, kann die Leuchteinheit 502 aufgrund der weiter oben bereits erläuterten Nachgiebigkeit und Flexibilität einer derartigen Verformung gut folgen. Auf diese Weise wird ein ästhetisch ansprechendes Erscheinungsbild der Beleuchtungsvorrichtung 501 aufrechterhalten, nicht bündige Übergänge oder ähnliches werden vermieden, und eventuelle verformungsbedingte Kraftwirkungen auf die Schnapper 597 können verringert werden.

Aus den Fig. 1-7 ist zudem ersichtlich, dass jede der Beleuchtungsvorrichtungen 1, 101, 201, 301, 401, 501 bevorzugt in Bezug auf eine in den Figuren 1-6 jeweils vertikal und projizierend verlaufende Mittelebene im Wesentlichen symmetrisch ausgebildet ist. Die Querschnitte der Trägerkomponenten 3, 103, 203, 303, 403, 503 sowie die Querschnitte des Profilelements 17, der flachen Basisteile 31 und 531, und des Einputzprofils 306, sind jeweils entlang der Längsrichtung L derselben im Wesentlichen konstant.

Alle der vorstehend unter Bezugnahme auf die Fig. 1-7 beschriebenen Beleuchtungsanordnungen 1, 101, 201, 301, 401, 501 sind jeweils mit vergleichsweise großer Länge entlang der jeweiligen Längsrichtung ausgebildet. Die nachgiebige Leuchteinheit 2 bzw. 502 ermöglicht bei allen vorstehend beschriebenen Ausführungsbeispielen eine vorteilhafte Anpassung der Leuchteinheit 2, 502 an Geometrieveränderungen der Trägerkomponente 3, 103, 203, 303, 403 bzw. 503, wobei die Geometrieveränderungen insbesondere bei den Ausführungsbeispielen der Fig. 1-4 und 6 auf Setzungsvorgänge eines Bauwerks zurückgehen können und im Falle der Fig. 5 Verformungen der Trägerkomponente 403 zum Beispiel auf die über die Länge der relativ langen, abgehängten Beleuchtungsvorrichtung 401 wirkenden Gewichtskräfte zurückgehen können.

Bei allen vorstehend erläuterten Ausführungsbeispielen schließt die Leuchteinheit 2 oder 502 auf der Sichtseite S derselben mit der Trägerkomponente 3, 103, 203, 303, 403 bzw. den Trägerkomponenten 503 bündig ab. Auch bei Verformungen der jeweiligen Trägerkomponente(n) kann bei der Erfindung der saubere, bündige Übergang und somit das ansprechende Erscheinungsbild gut aufrechterhalten werden.

Es sei erwähnt, dass bei den vorstehenden Ausführungsbeispielen mehrere Leuchteinheiten 2 in Längsrichtung L aufeinander folgend in der Trägerkomponente 3, 103, 203, 303 oder 403 aufgenommen werden können, oder mehrere Leuchteinheiten 502 in Längsrichtung L aufeinander folgend zwischen den Trägerkomponenten 503 an diesen befestigt werden können. Die Leuchteinheiten 2, 502 können jeweils eine vergleichsweise große Länge in Längsrichtung L aufweisen, zum Beispiel eine Länge von bis zu etwa 3200 mm. Jedoch können Leuchteinheiten 2, 502 mit kleineren Längen vorgesehen sein, zum Beispiel etwa 600 mm lang oder etwa 1200 mm lang oder etwa 1800 mm lang oder etwa 2400 mm lang. Diese Längen sind jedoch beispielhaft zu verstehen und andere Abmessungen der Leuchteinheiten 2, 502 in Längsrichtung L sind vorstellbar.

Ferner sei erwähnt, dass die vorstehend beschriebenen Ausführungsbeispiele auch im Zusammenhang mit Plattenkonstruktionen im Wandbereich Anwendung finden können.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Insbesondere ist es nicht unbedingt notwendig, dass die Trägerkomponente, wie bei den ersten bis sechsten Ausführungsbeispielen, entlang ihrer Längsrichtung geradlinig verläuft, sondern die Trägerkomponente könnte beispielsweise einem in einer Wand- oder Deckenebene gekrümmten Verlauf folgen. Ein entsprechend gekrümmter Verlauf ist auch für die Leuchteinheit denkbar.

### Bezugszeichenliste

- 1: Beleuchtungsvorrichtung
- 2: Leuchteinheit
- 3: Trägerkomponente
- 4: Zähne
- 5: Schiene
- 7: Plattenelement
- 11: Schraube
- 13: Aufnahmebereich (Trägerkomponente)
- 17: lichtdurchlässiges Profilelement
- 19: Schenkel
- 20: Bodenabschnitt
- 23: Innenbereich (Profilelement)
- 24: Boden (Innenbereich)
- 29: Lichterzeugungseinrichtung
- 31: flaches Basisteil
- 33: Seitenrand (Basisteil)
- 37: Öffnung
- 41: Vorsprung
- 43: Vorsprung
- 47: Nut
- 49: ferromagnetisches Element
- 51: Nut
- 53: Permanentmagnet
- 55: Absturzsicherung
- 59: Enddeckel
- 61: LED-Platine
- 62: LED
- 63: Rand (LED-Platine)
- 67: Lichtleiterelement
- 68: Randbereich (Lichtleiterelement)
- 71: Isolationselement
- 73: Randbereich (Isolationselement)
- 79: Nut
- 83: Freiraum
- 89: Rippe
- 95: Anschlusseinrichtung
- 96: Konverter

- 101: Beleuchtungsvorrichtung
- 103: Trägerkomponente
- 106: Flansch

- 201: Beleuchtungsvorrichtung
- 203: Trägerkomponente
- 203a: erster Abschnitt (Trägerkomponente)
- 203b: zweiter Abschnitt (Trägerkomponente)
- 203c: Innenraum (erster Abschnitt)

- 301: Beleuchtungsvorrichtung
- 303: Trägerkomponente
- 303a: erster Abschnitt (Trägerkomponente)
- 303b: zweiter Abschnitt (Trägerkomponente)
- 303c: Innenraum (erster Abschnitt)
- 306: Einputzprofil
- 306a: Schenkel (Einputzprofil)

- 401: Beleuchtungsvorrichtung
- 403: Trägerkomponente
- 410: Hängemittel

- 501: Beleuchtungsvorrichtung
- 502: Leuchteinheit
- 502a: seitlicher Längsrand (Leuchteinheit)
- 503: Trägerkomponente
- 531: flaches Basisteil
- 597: Schnapper
- 597a: Gleitrampe
- 598: Schnappergehäuse

- D: Dickenrichtung
- E: Ebene
- L: Längsrichtung
- P: Pfeilrichtung
- Q: Querrichtung
- S: Sichtseite
- t: Abmessung in Dickenrichtung (Trägerkomponente)
- V: vertikale Richtung

## Patentansprüche

1. Leuchteinheit (2; 502),
wobei die Leuchteinheit (2; 502) flach und langgestreckt ausgebildet und für ein Befestigen derselben an einer profilförmigen Trägerkomponente (3; 103; 203; 303; 403; 503) eingerichtet ist;
wobei die Leuchteinheit (2; 502) ein zumindest abschnittsweise lichtdurchlässiges Profilelement (17) mit einer zumindest abschnittsweise U-artigen Querschnittsform aufweist, einander gegenüberliegende Schenkel (19) der U-artigen Querschnittsform sich im Wesentlichen in Dickenrichtung (D) der Leuchteinheit (2; 502) erstrecken, und durch die U-artige Querschnittsform ein Innenbereich (23) des Profilelements (17) mit einer zwischen den Schenkeln (19) gebildeten Öffnung (37) ausgebildet ist;
wobei die Leuchteinheit (2; 502) ferner ein flaches Basisteil (31; 531) aufweist, das im Bereich der Öffnung (37) angeordnet und mit dem Profilelement (17) gekoppelt ist;
wobei das zumindest abschnittsweise lichtdurchlässige Profilelement (17) mit einem ersten Material gebildet ist,
wobei in dem Innenbereich (23) eine Lichterzeugungseinrichtung (29) zur Erzeugung von durch die Leuchteinheit (2; 502) im Betrieb abgebbarem Licht angeordnet ist;
wobei die Lichterzeugungseinrichtung (29) mindestens eine LED-Platine (61) aufweist, die in dem Innenbereich (23) des Profilelements (17) einem der Schenkel (19) benachbart angeordnet ist;
wobei die Leuchteinheit (2; 502) ein Isolationselement (71) aufweist, welches folienförmig oder schichtförmig ausgebildet und auf einer dem Innenbereich (23) zugewandten Seite des flachen Basisteils (31; 531) angeordnet ist, um das Basisteil (31; 531) gegenüber der LED-Platine (61) elektrisch isolierend abzuschirmen; **dadurch gekennzeichnet, dass** das erste Material einer Verformung weniger Widerstand entgegensetzt als ein zweites Material, mit dem das flache Basisteil (31; 531) gebildet ist, und das Isolationselement (71) in einer Richtung (Q) quer zu der LED-Platine (61) zu dem der LED-Platine (61) benachbarten Schenkel (19) hin über einen Rand (63) der LED-Platine (61) übersteht; und dass sich das Isolationselement (71) in einem Randbereich (73) desselben in eine Nut (79) in dem zumindest abschnittsweise lichtdurchlässigen Profilelement (17) hinein erstreckt.

2. Leuchteinheit nach Anspruch 1,
**dadurch gekennzeichnet, dass** ein Elastizitätsmodul des ersten Materials geringer ist als ein Elastizitätsmodul des zweiten Materials.

3. Leuchteinheit nach Anspruch 1 oder 2,
**dadurch gekennzeichnet, dass** das zumindest abschnittsweise lichtdurchlässige Profilelement (17) als ein Profil aus dem ersten Material und das flache Basisteil (31; 531) als ein Profil aus dem zweiten Material ausgebildet sind.

4. Leuchteinheit nach einem der vorstehenden Ansprüche,
**dadurch gekennzeichnet, dass** die Leuchteinheit (2) mittels Magnetkraft an der Trägerkomponente (3; 103; 203; 303; 403) befestigbar ist und/oder dass die Leuchteinheit (502) mittels eines Schnappers (597) formschlüssig an der Trägerkomponente (503) befestigbar ist.

5. Leuchteinheit nach einem der vorstehenden Ansprüche,
**dadurch gekennzeichnet, dass** die Leuchteinheit (2) für die Befestigung der Leuchteinheit (2) mindestens einen Magneten (53), insbesondere einen Permanentmagneten, aufweist, wobei der Magnet (53) vorzugsweise streifenförmig ausgebildet und insbesondere in einer Nut (51) des Basisteils (31) an dem Basisteil (31) gehalten ist.

6. Leuchteinheit nach einem der vorstehenden Ansprüche,
**dadurch gekennzeichnet, dass** sich die LED-Platine (61) quer, vorzugsweise im Wesentlichen senkrecht, zu dem Isolationselement (71) erstreckt.

7. Leuchteinheit nach einem der vorstehenden Ansprüche,
**dadurch gekennzeichnet, dass** das Isolationselement (71) über einen Seitenrand (33) des flachen Basisteils (31; 531) zu dem der LED-Platine (61) benachbarten Schenkel (19) der U-artigen Querschnittsform hin übersteht.

8. Leuchteinheit nach einem der vorstehenden Ansprüche,
**dadurch gekennzeichnet, dass** in dem Innenbereich (23) ein plattenförmiges Lichtleiterelement (67) im Wesentlichen parallel zu dem flachen Basisteil (31; 531) angeordnet ist, wobei die Lichterzeugungseinrichtung (29) für eine seitliche Lichteinspeisung in das Lichtleiterelement (67) einem Randbereich (68) des Lichtleiterelements (67) benachbart angeordnet ist, und insbesondere dass die Leuchteinheit (2; 502) einen Reflektor (71) zwischen dem flachen Basisteil (31; 531) und dem Lichtleiterelement (67) aufweist.

9. Leuchteinheit nach einem der Ansprüche 1 bis 7,
**dadurch gekennzeichnet, dass** in dem Innenbereich (23) ein plattenförmiges Lichtleiterelement (67) im Wesentlichen parallel zu dem flachen Basisteil (31; 531) angeordnet ist, wobei die Lichterzeugungseinrichtung (29) für eine seitliche Lichteinspeisung in das Lichtleiterelement (67) einem Randbereich (68) des Lichtleiterelements (67) benachbart angeordnet ist, und dass das Isolationselement (71) zwischen dem flachen Basisteil (31; 531) und dem Lichtleiterelement (67) angeordnet ist und als ein Reflektor ausgebildet und/oder mit einem lichtreflektierenden Bestandteil, insbesondere einer lichtreflektierenden Schicht oder Beschichtung, versehen ist.

10. Leuchteinheit nach einem der vorstehenden Ansprüche,
**dadurch gekennzeichnet, dass** das zumindest abschnittsweise lichtdurchlässige Profilelement (17) aus einem Kunststoffmaterial als das erste Material gefertigt ist und/oder dass das flache Basisteil (31) als ein aus einem Metallmaterial als das zweite Material gefertigtes Basisprofil ausgebildet ist.

11. Beleuchtungsvorrichtung (1; 101; 201; 301; 401; 501),
mit einer flachen, langgestreckten Leuchteinheit (2; 502) gemäß einem der vorstehenden Ansprüche; und
mit einer profilförmigen Trägerkomponente (3; 103; 203; 303; 403; 503);
wobei die Leuchteinheit (2; 502) für ein Befestigen derselben an der Trägerkomponente (3; 103; 203; 303; 403; 503) eingerichtet ist.

12. Beleuchtungsvorrichtung nach Anspruch 11,
**dadurch gekennzeichnet, dass** an dem Basisteil (31; 531) mindestens eine basisteilseitige Einrichtung (53; 597, 598) zur Befestigung der Leuchteinheit (2; 502) an der Trägerkomponente (3; 103; 203; 303; 403; 503) angeordnet ist und insbesondere dass an der Trägerkomponente (3; 103; 203; 303; 403) mindestens eine trägerkomponentenseitige Einrichtung (49) angeordnet ist, welche zur Befestigung der Leuchteinheit (2) an der Trägerkomponente (3; 103; 203; 303; 403) mit der basisteilseitigen Einrichtung (53) zusammenwirkt.

13. Beleuchtungsvorrichtung nach Anspruch 11 oder 12,
**dadurch gekennzeichnet, dass** die Trägerkomponente (3; 103; 203; 303; 403) für die Befestigung der Leuchteinheit (2) mit mindestens einem ferromagnetischen Element (49) versehen ist, wobei das ferromagnetische Element (49) vorzugsweise blattartig oder streifenartig ausgebildet und insbesondere in einer Nut (47) der Trägerkomponente (3; 103; 203; 303; 403) an der Trägerkomponente (3; 103; 203; 303; 403) gehalten ist.

14. Beleuchtungsvorrichtung nach einem der Ansprüche 11 bis 13,
**dadurch gekennzeichnet, dass** die Trägerkomponente (3; 103; 203; 303; 403; 503) als ein aus einem Metallmaterial gefertigtes Trägerprofil ausgebildet ist.

## Claims

1. Lighting unit (2; 502),
wherein the lighting unit (2; 502) is designed to be flat and elongate and is configured for attachment thereof to a profile-shaped carrier component (3; 103; 203; 303; 403; 503) ;
wherein the lighting unit (2; 502) comprises a profile element (17) which is permeable to light at least in sections and has a cross-sectional shape which is U-shaped at least in sections, mutually opposite limbs (19) of the U-shaped cross-sectional shape extending substantially in the thickness direction (D) of the lighting unit (2; 502), and the U-shaped cross-sectional shape forming an internal region (23) of the profile element (17) having an opening (37) formed between the limbs (19);
wherein the lighting unit (2; 502) further comprising a flat base part (31; 531) which is arranged in the region of the opening (37) and is coupled to the profile element (17);
wherein the profile element (17) which is permeable to light at least in sections is formed with a first material,
wherein a light-generating device (29) is arranged in the internal region (23) for generating light which can be output by the lighting unit (2; 502) during operation;
wherein the light-generating device (29) comprises at least one LED board (61) which is arranged in the internal region (23) of the profile element (17) adjacent to one of the limbs (19);
wherein the lighting unit (2; 502) comprises an insulating element (71) which is formed as a film or layer and is arranged on a side of the flat base part (31; 531) facing the internal region (23) in order to shield the base part (31; 531) from the LED board (61) in an electrically insulating manner;
**characterised in that** the first material offers less resistance to a deformation than a second material with which the flat base part (31; 531) is formed, and
the insulating element (71) protrudes in a direction (Q) transverse to the LED board (61) to the limb (19) adjacent to the LED board (61) beyond an edge (63) of the LED board (61); and
**in that** the insulating element (71) extends in an edge region (73) thereof into a groove (79) in the profile element (17) which is permeable to light at least in sections.

2. Lighting unit as claimed in claim 1,
**characterised in that** a modulus of elasticity of the first material is lower than a modulus of elasticity of the second material.

3. Lighting unit as claimed in claim 1 or 2,
**characterised in that** the profile element (17) which is permeable to light at least in sections is formed as a profile from the first material and the flat base part (31; 531) is formed as a profile from the second material.

4. Lighting unit as claimed in any one of the preceding claims, **characterised in that** the lighting unit (2) can be attached to the carrier component (3; 103; 203; 303; 403) by means of magnetic force and/or **in that** the lighting unit (502) can be attached to the carrier component (503) in a form-fitting manner by means of a catch (597).

5. Lighting unit as claimed in any one of the preceding claims, **characterised in that** the lighting unit (2) comprises, for the attachment of the lighting unit (2), at least one magnet (53), in particular a permanent magnet, wherein the magnet (53) is preferably strip-shaped and is held on the base part (31) in particular in a groove (51) of the base part (31).

6. Lighting unit as claimed in any one of the preceding claims, **characterised in that** the LED board (61) extends transversely, preferably substantially perpendicularly, to the insulating element (71).

7. Lighting unit as claimed in any one of the preceding claims, **characterised in that** the insulating element (71) protrudes beyond a side edge (33) of the flat base part (31; 531) to the limb (19) of the U-shaped cross-sectional shape adjacent to the LED board (61).

8. Lighting unit as claimed in any one of the preceding claims, **characterised in that** a plate-shaped light conductor element (67) is arranged in the internal region (23) substantially parallel to the flat base part (31; 531), wherein the light-generating device (29) is arranged adjacent to an edge region (68) of the light conductor element (67) for laterally feeding-in light into the light conductor element (67), and in particular **in that** the lighting unit (2; 502) comprises a reflector (71) between the flat base part (31; 531) and the light conductor element (67).

9. Lighting unit as claimed in any one of claims 1 to 7, **characterised in that** a plate-shaped light conductor element (67) is arranged in the internal region (23) substantially parallel to the flat base part (31; 531), wherein the light-generating device (29) is arranged adjacent to an edge region (68) of the light conductor element (67) for laterally feeding-in light into the light conductor element (67), and **in that** the insulating element (71) is arranged between the flat base part (31; 531) and the light conductor element (67) and is formed as a reflector and/or is provided with a light-reflecting component, in particular a light-reflecting layer or coating.

10. Lighting unit as claimed in any one of the preceding claims, **characterised in that** the profile element (17) which is permeable to light at least in sections is produced from a synthetic material as the first material and/or **in that** the flat base part (31) is formed as a base profile produced from a metal material as the second material.

11. Illumination device (1; 101; 201; 301; 401; 501),
having a flat, elongate lighting unit (2; 502) as claimed in any one of the preceding claims; and
having a profile-shaped carrier component (3; 103; 203; 303; 403; 503);
wherein the lighting unit (2; 502) is configured for attachment thereof to the carrier component (3; 103; 203; 303; 403; 503).

12. Illumination device as claimed in claim 11,
**characterised in that** at least one base part-side device (53; 597, 598) is arranged on the base part (31; 531) for attaching the lighting unit (2; 502) to the carrier component (3; 103; 203; 303; 403; 503) and in particular **in that** at least one carrier component-side device (49) is arranged on the carrier component (3; 103; 203; 303; 403) and co-operates with the base part-side device (53) for attaching the lighting unit (2) to the carrier component (3; 103; 203; 303; 403).

13. Illumination device as claimed in claim 11 or 12,
**characterised in that** the carrier component (3; 103; 203; 303; 403) is provided with at least one ferromagnetic element (49) for attaching the lighting unit (2), wherein the ferromagnetic element (49) is preferably sheet-like or strip-like and is held on the carrier component (3; 103; 203; 303; 403) in particular in a groove (47) of the carrier component (3; 103; 203; 303; 403).

14. Illumination device as claimed in any one of claims 11 to 13,
**characterised in that** the carrier component (3; 103; 203; 303; 403; 503) is formed as a carrier profile produced from a metal material.

## Revendications

1. Unité d'éclairage (2 ; 502),
laquelle unité d'éclairage (2 ; 502) ayant une configuration plate et allongée et est agencée pour être fixée sur un composant support en forme de profilé (3 ; 103 ; 203 ; 303 ; 403 ; 503) ;
laquelle unité d'éclairage (2 ; 502) présentant un élément de profilé (17) translucide au moins par sections avec une forme en U en section transversale au moins par sections, des branches (19) de la forme en U en section transversale opposées l'une à l'autre s'étendant sensiblement dans la direction de l'épaisseur (D) de l'unité d'éclairage (2 ; 502), et par le biais de la forme en U en section transversale étant configurée une zone intérieure (23) de l'élément de profilé (17) avec une ouverture (37) formée entre les branches (19) ;
laquelle unité d'éclairage (2 ; 502) présentant en outre une partie de base plate (31 ; 531) qui est disposée au niveau de l'ouverture (37) et est couplée à l'élément de profilé (17) ;
dans laquelle l'élément de profilé (17) translucide au moins par sections est formé d'un premier matériau ;
dans laquelle dans la zone intérieure (23) est disposé un moyen de production de lumière (29) pour la production d'une lumière qui peut être dégagée pendant le fonctionnement par le biais de l'unité d'éclairage (2 ; 502) ;
dans laquelle le moyen de production de lumière (29) présente au moins une platine LED (61) qui est disposée dans la zone intérieure (23) de l'élément de profilé (17) de manière adjacente à une des branches (19) ;
laquelle unité d'éclairage (2 ; 502) présentant un élément d'isolation (71) qui est configuré en forme de feuille ou de couche et est disposé sur la face de la partie de base plate (31 ; 531) en regard de la zone intérieure (23) pour blinder la partie de base (31 ; 531) par rapport à la platine LED (61) en l'isolant électriquement ;
**caractérisée en ce que** le premier matériau produit une moindre résistance à une déformation qu'un second matériau avec lequel la partie de base plate (31 ; 531) est formée, et l'élément d'isolation (71) dans une direction (Q) transversale à la platine LED (61) vers la branche (19) adjacente à la platine LED (61) fait saillie d'un bord (63) de la platine LED (61) ; et
**en ce que** l'élément d'isolation (71) dans une zone de bord (73) de celui-ci s'étend dans une rainure (79) dans l'élément de profilé (17) translucide au moins par sections.

2. Unité d'éclairage selon la revendication 1,
**caractérisée en ce qu'**un module d'élasticité du premier matériau est inférieur à un module d'élasticité du second matériau.

3. Unité d'éclairage selon la revendication 1 ou 2,
**caractérisée en ce que** l'élément de profilé (17) translucide au moins par sections est configuré sous la forme d'un profilé réalisé du premier matériau et la partie de base plate (31 ; 531) sous la forme d'un profilé réalisé du second matériau.

4. Unité d'éclairage selon une des revendications précédentes, **caractérisée en ce que** l'unité d'éclairage (2) peut être fixée sur le composant support (3 ; 103 ; 203 ; 303 ; 403) à l'aide d'une force magnétique et/ou **en ce que** l'unité d'éclairage (502) peut être fixée par complémentarité de forme sur le composant support (503) à l'aide d'un élément d'accouplement à déclic (597).

5. Unité d'éclairage selon une des revendications précédentes, **caractérisée en ce que** l'unité d'éclairage (2) présente, pour la fixation de l'unité d'éclairage (2), au moins un aimant (53), en particulier un aimant permanent, dans laquelle l'aimant (53) est configuré de préférence en forme de bande et en particulier est maintenu sur la partie de base (31) dans une rainure (51) de la partie de base (31).

6. Unité d'éclairage selon une des revendications précédentes, **caractérisée en ce que** la platine LED (61) s'étend transversalement, de préférence sensiblement perpendiculairement, à l'élément d'isolation (71).

7. Unité d'éclairage selon une des revendications précédentes, **caractérisée en ce que** l'élément d'isolation (71) fait saillie d'un bord latéral (33) de la partie de base plate (31 ; 531) vers la branche (19) adjacente à la platine LED (61) de la forme en U en coupe transversale.

8. Unité d'éclairage selon une des revendications précédentes, **caractérisée en ce que**, dans la zone intérieure (23), un guide de lumière par fibres optiques en forme de plaque (67) est disposé sensiblement parallèlement à la partie de base plate (31 ; 531), dans laquelle le moyen de production de lumière (29) est disposé de manière adjacente à une zone de bord (68) de l'élément conducteur de lumière (67) pour une alimentation en lumière latérale dans le guide de lumière par fibres optiques (67), et
en particulier **en ce que** l'unité d'éclairage (2 ; 502) présente un réflecteur (71) entre la partie de base plate (31 ; 531) et le guide de lumière par fibres optiques (67).

9. Unité d'éclairage selon une des revendications 1 à 7, **caractérisée en ce que** dans la zone intérieure (23) un guide de lumière par fibres optiques en forme de plaque (67) est disposé sensiblement parallèlement à la partie de base plate (31 ; 531), dans laquelle le moyen de production de lumière (29) est disposé de manière adjacente à une zone de bord (68) du guide de lumière par fibres optiques (67) pour une alimentation en lumière latérale dans le guide de lumière par fibres optiques (67), et **en ce que** l'élément d'isolation (71) est disposé entre la partie de base plate (31 ; 531) et le guide de lumière par fibres optiques (67) et est configuré sous la forme d'un réflecteur et/ou est muni d'une composante réfléchissant la lumière, en particulier d'une couche ou d'un revêtement réfléchissant la lumière.

10. Unité d'éclairage selon une des revendications précédentes, **caractérisée en ce que** l'élément de profilé (17) translucide au moins par sections est fabriqué à partir d'une matière plastique en tant que le premier matériau et/ou **en ce que** la partie de base plate (31) est configurée sous la forme d'un profilé de base fabriqué à partir d'un matériau métallique en tant que le second matériau.

11. Dispositif d'éclairage (1 ; 101 ; 201 ; 301 ; 401 ; 501), comportant une unité d'éclairage plate et allongée (2 ; 502) selon une des revendications précédentes ; et
comportant un composant support en forme de profilé (3 ; 103 ; 203 ; 303 ; 403 ; 503) ;
dans lequel l'unité d'éclairage (2 ; 502) est agencée pour être fixée sur le composant support (3 ; 103 ; 203 ; 303 ; 403 ; 503).

12. Dispositif d'éclairage selon la revendication 11,
**caractérisé en ce que**, au niveau de la partie de base (31 ; 531), au moins un moyen du côté de la partie de base (53 ; 597, 598) est disposé pour fixer l'unité d'éclairage (2 ; 502) sur le composant support (3 ; 103 ; 203 ; 303 ; 403 ; 503) et en particulier **en ce que**, sur le composant support (3 ; 103 ; 203 ; 303 ; 403) au moins un moyen du côté du composant support (49) est disposé, qui coopère avec le moyen du côté de la partie de base (53) pour la fixation de l'unité d'éclairage (2) sur le composant support (3 ; 103 ; 203 ; 303 ; 403).

13. Dispositif d'éclairage selon la revendication 11 ou 12, **caractérisé en ce que** le composant support (3 ; 103 ; 203 ; 303 ; 403) est muni d'au moins un élément ferromagnétique (49) pour la fixation de l'unité d'éclairage (2), dans lequel l'élément ferromagnétique (49) est configuré de préférence en forme de feuille ou de bande et en particulier est maintenu sur le composant support (3 ; 103 ; 203 ; 303 ; 403) dans une rainure (47) du composant support (3 ; 103 ; 203 ; 303 ; 403).

14. Dispositif d'éclairage selon une des revendications 11 à 13, **caractérisé en ce que** le composant support (3 ; 103 ; 203 ; 303 ; 403 ; 503) est configuré sous la forme d'un profilé support fabriqué à partir d'un matériau métallique.
